Europäisches Patentamt

European Patent Office

Office européen des brevets

(19)

(11) Publication number: 0 342 001
A2

## EUROPEAN PATENT APPLICATION

(12)

(21) Application number: 89304721.7

(22) Date of filing: 10.05.89

(51) Int. Cl.4: **C 08 F 246/00**
**C 09 D 3/74**

(30) Priority: 12.05.88 US 193456

(43) Date of publication of application:
15.11.89 Bulletin 89/46

(84) Designated Contracting States:
AT BE CH DE ES FR GB GR IT LI LU NL SE

(71) Applicant: ROHM AND HAAS COMPANY
Independence Mall West
Philadelphia Pennsylvania 19105 (US)

(72) Inventor: Lee, Der-Jiun
1-22 Wusan-Tou Michang
Pali Taipei (TW)

Emmons, William David
1411 Holcomb Road
Huntingdon Valley Pennsylvania 19006 (US)

Sperry, Peter Reeves
49 Woodview Drive
Doylestown Pennsylvania 18901 (US)

(74) Representative: Buckley, Guy Julian et al
ROHM AND HAAS (UK) LTD. European Operations Patent
Department Lennig House 2 Mason's Avenue
Croydon CR9 3NB (GB)

(54) Copolymer for use in or as a polymeric binder in intumescent coatings.

(57) A copolymer, for use in or as a polymeric binder containing thermally labile groups is provided for use in intumescent coatings. This binder permits the formulation of coatings possessing improved fire retardance and intumescing properties at reduced concentrations of intumescent chemicals. The preferred polymeric binders are thermally labile (meth)acrylic copolymers prepared with low levels of copolymerizable aldehydes such as methacrolein.

EP 0 342 001 A2

## Description

## COPOLYMER FOR USE IN OR AS A POLYMERIC BINDER IN INTUMESCENT COATINGS

This invention concerns copolymers for use in or as polymeric binders for fire retardant coatings and more particularly intumescent coatings containing a polymeric binder modified with a copolymerizable monomer which renders the binder thermally labile. As used hereinafter, the term "thermally labile comonomer" shall refer to a monomer which when incorporated into the polymeric binder renders the backbone of the resulting copolymer binder susceptible to thermal or thermo-oxidative decomposition.

The ASTM defines a fire retardant coating as a fluid-applied surface covering on a combustible material which delays ignition and reduces flame spread when the covering is exposed to flame impingement.

Fire retardant coatings are also useful on non-flammable substrates, such as for example, concrete block or structural steel, to reduce the burning and flame spread which would otherwise result from a flammable coating as well as to reduce the temperature rise and resulting structural damage, deformation or collapse, of the substrate itself.

There are two general types of fire retardant coating: non-flammable coatings and intumescent coatings. Non-flammable coatings contain either high levels of additives or modified binders, such as for example those containing halogen groups, which generate a non-combustible vapor when the covering is exposed to flame. Intumescent coatings operate by a different mechanism than nonflammable coatings. When sufficient heat is applied to an intumescent coating the coating expands, by the action of gases generated in the coating, to produce a tough insulating foam residue which adheres to and protects the substrate against temperature rise. Many materials have been used in combination to produce intumescent coatings. Intumescent Coating Systems, Their Development and Chemistry, H. L. Vandersall, J. Fire and Flammability Vol. 2, April 1971 presents a detailed review of intumescent chemical systems and the proposed mechanisms of operation. The most commonly used (and referred to in the art as), intumescent coatings contain four basic components, sometimes called "reactive pigments", dispersed in a binder matrix. The reactive pigments include (1) an inorganic acid or a material which yields an acid at temperatures between 100°C and 250°C, such as for example, ammonium polyphosphate which yields phosphoric acid; (2) a polyhydric material rich in carbon, also referred to as a carbon hydrate, such as for example, pentaerythritol or dipentaerythritol; (3) an organic amine or amide, such as for example, a melamine; and (4) a halogenated material which releases hydrochloric acid gas on decomposition. The basic intumescent mechanism is proposed to involve the formation of a carbonaceous char by the dehydration reaction of the generated acid with the polyhydric material. The amine may participate in char formation, but is described primarily as a blowing agent for insulating char foam formation. Because the insulating char stops fire and remains on the substrate, it offers better fire and thermal protection under severe fire conditions than non-flammable type coatings.

The coatings industry seeks fire retardant coatings which not only meet fire retardancy requirements, such as for example those requirements established by Underwriters Laboratory, but which also possess desirable coating properties. The reactive pigments utilized in the formulation of an intumescent coating are not sufficient in and of themselves to provide desirable coating properties. For example, an intumescent paint must provide all the performance characteristics expected of a conventional paint plus the added benefit of fire retardancy. Incorporating both fire retardance and good coating properties in one system is not straightforward. The combinations of additives such as for example, dispersants, defoamers and thickeners with binders and reactive pigments used in formulating an intumescent coating can often result in a formulation possessing both poor coating and poor fire retardancy properties. The selection of the binder and pigment volume concentration can have a dramatic effect on the intumescence of a coating. Vandersall demonstrates the detrimental effect that a polyvinyl acetate latex binder can have on the intumescence of a formulation containing dipentaerythritol, dicyandiamide and monoammonium phosphate (See Vandersall page 107-108).

Intumescent pigments themselves may be intrinsically water sensitive or highly water soluble due, for example, to the presence of such groups as hydroxyl, phosphate, amine and the like. In addition, the concentration of reactive pigments in an intumescent paint formulation needed to obtain acceptable fire retardancy is typically high (on the order of about 60 percent pigment volume concentration (PVC) or higher). This high PVC level seriously detracts from desired coating qualities, such as for example, water and scrub resistance. Maintaining fire retardancy and improving water and scrub resistance can be achieved by reducing the concentration of the other pigments in the formulation, but this usually detracts from the hiding power and other performance characteristics of the coating. In some systems the resinous binder itself has been found to inhibit intumescence. Reducing the binder concentration can counteract this problem, but usually at the expense of adhesion, and resistance to water, wear and abrasion. Conventional intumescent paints containing either alkyd resin binders or polyvinylacetate latex require a total pigment volume concentration (PVC) of about 70 percent to achieve acceptable intumescence, but such high PVC levels are not desirable from either a cost perspective or from a film property perspective. "PVC" as used herein is equal to the sum of the volume of reactive pigments plus other pigments in the formulation divided by the total volume of all of these pigments plus the resinous materials in the formulation, for example, reactive pigments, hiding pigments, binders, etc.

It has been found that the thermal properties of the binder are critical to the functioning of an intumescent coating (See Use of Thermal Analysis to Screen Binders for Intumescent Coatings), Roth and Green, J. Paint Technology, Vol. 16, No. 500-March 1974). If the binder softens or melts too quickly, it may not allow the formation of a stable char. On the other hand, the rate and efficiency of the heat induced char formation reaction is postulated to depend on the diffusion of the intumescent chemicals through the polymeric melt. The melt viscosity of the binder is, therefore, a crucial factor; the less viscous the binder melt, the more efficient the diffusion and contribution to char formation. Typically the melt viscosity of a polymer is directly related to the molecular weight of the polymer. Accordingly, this relationship would tend to favor the selection of lower molecular weight polymeric binders. Low molecular weight polymers are, however, generally more flammable than high molecular weight polymers of the same composition, and accordingly, reducing the molecular weight of the binder polymer to lower its melt viscosity in the exposed coating to facilitate the intumescence reactions needed to improve char formation may actually contribute fuel to the fire and disadvantageously increase flame spread. Moreover, other properties of the coating, such as for example, film toughness, may suffer as the molecular weight of the binder is reduced.

It is, therefore, desired to provide a polymer binder for intumescent coatings which reduces flame spread during the early stages of a fire and which contributes to improved char formation and intumescence during the later stage of the fire.

A further object is to provide a decomposable polymer binder for Class A (UL) intumescent coatings, and particularly for intumescent paints.

Although polymers are successfully used as binders in aqueous formulated coatings, such as for example, interior and exterior latex paints, caulks and mastics, their use as binders in intumescent coatings containing reactive pigments has been hampered because the high PVC levels needed for intumesence produce costly formulations with poor coating properties.

We have discovered a means for controlling the molecular weight of polymers in situ so that they can be used effectively with reactive pigments at low PVC to produce acceptable coatings having good intumescent fire retardance.

Accordingly the invention provides a copolymer, for use in or as a polymeric binder in intumescent coatings, comprising a copolymer formed from a predominant amount, preferably no more than 99 wt % and more preferably 99-90 wt %, of one or more first monomers and a minor amount, preferably at least 1 wt % and more preferably from 1 to 10 wt %, of at least one copolymerizable thermally labile comonomer, the amount of said at least one thermally labile comonomer being sufficient to cause the resultant copolymer to decompose into fragments of lower molecular weight when exposed to flame.

The invention also provides in another aspect an intumescent fire retardant coating containing the above polymeric binder, and a method of forming such a coating.

The provision of a sufficient amount of a thermally labile monomer in the polymer backbone or chain causes in situ molecular weight reduction of the copolymer binder when the binder or coating containing it is exposed to heat or flame. In situ molecular weight control of the modified polymeric binder permits the use of a high molecular weight polymer for good coating performance with low PVC as well as providing low melt viscosity for good intumescence when the coating is exposed to flame.

The in situ molecular weight control of the polymer is achieved by the chemical modification of the polymer backbone. This is accomplished by copolymerizing at least one first monomer or mixture of monomers with at least one second thermally labile monomer. The thermally labile monomer contains a group which imparts instability to the resulting copolymer at elevated temperatures such that at elevated temperatures the backbone of the copolymer undergoes chain scission. This in situ molecular weight reduction permits the decomposable polymer binder to be designed with built-in or programmed molecular weight control, the molecular weight being a function of the temperature history it encounters. Since a high initial molecular weight polymer is desirable for coating properties and initial resistance to flame spread, and a lower molecular weight polymer is desirable in the melted coating for intumescent char formation, the modified polymer binder is designed such that it possesses an optimum high molecular weight upon synthesis and optimum lower molecular weight in the melt. The lower final molecular weight, however, must also be controlled to balance ease of char formation against the increased flammability potential of low molecular weight fragments of the polymer.

The modified polymer binder is formed from a predominant amount of one or more first monomer or copolymerizable monomers known in the coatings art and a small amount of at least one thermally labile monomer. The copolymeric binder preferably possesses a glass transition temperature lower than about 80°C. Modifications to the coating formulation containing the modified copoymeric binder to optimize the film formation characteristics of the coating may be achieved by the incorporation of conventional additives into the coating formulation as described in more detail hereinafter.

Examples of suitable first monomers for the predominant portion of the polymer include one or more ethylenically unsaturated monomers having one or more groups of the formula $-HC=C<$. examples of such ethylenically unsaturated monomers include styrene, alpha-methylstyrene, vinyl toluene, ethylene, vinyl acetate, vinyl chloride, vinylidene chloride, acrylonitrile, acrylamide, methacrylamide, acrylic acid, methacrylic acid, (meth)acryloxy-propionic acid, itaconic acid, aconitic acid, maleic acid, monomethyl maleate, monomethyl fumarate, monomethyl itaconate, various $(C_1-C_{20})$ alkyl or $(C_3-C_{20})$ alkenyl esters of (meth)acrylic acid and the like. The expression (meth)acrylic, as used herein, is intended to serve as a generic expression embracing both acrylic and methacrylic acid and esters thereof e.g., methyl (meth)acrylate, ethyl(meth)acrylate, butyl(meth)acrylate, isobutyl (meth)acrylate, 2-ethyl hexyl(meth)acrylate, benzyl(meth)acrylate, lauryl(meth)acrylate, oleyl(meth)acrylate, palmityl(meth)acrylate, stearyl(meth)acrylate and the like. Sequentially polymerized core-shell type polymeric binders, such as those prepared by sequential emulsion polymerization, as known in the art, may be employed as the predominant polymeric portion of the modified polymer binder provided that the outer-covering or shell is a polymer capable of incorporating the thermally labile comonomer. Thermoplastic polymers which undergo substantial self-crosslinking or which are capable of substantial thermal crosslinking with the reactive pigments employed in an intumescent coatings before the intumescent reaction or foaming process beings should be avoided. We have found a preference for the predominant portion of the copolymers to be formed a first monomer selected from one or more of the lower alkyl(C₁-C₄) esters of (meth)acrylic acid. More preferred are emulsion copolymers formed from methacrylic acid, butyl acrylate, ethyl acrylate, vinyl acetate and methyl methacrylate as illustrated in the examples presented hereinafter.

The thermally labile comonomer or comonomers is selected from monomers which can be copolymerized with the first monomer or monomers. The concentration of the thermally labile comonomer is a function of its ability to produce a copolymer which possesses both good coating properties and adequate decomposition and tinumescence at elevated temperature. It is believed that in situ molecular weight control of the resulting copolymer binder is the result of free radical or oxidative induced chain scission of the modified polymer backbone. Although applicants do not intend the invention to be limited by such a mechanism, thermally labile comonomers which operate by such a mechanism should be employed at a concentration which will generate a sufficient flux of free radicals at elevated temperature for chain scission of the polymer backbone. In this regard we have found a preference for thermally labile compounds having a carbon atom double bonded to an oxygen atom. We have found that increasing the concentration of the thermally labile comonomer lowers the decomposition temperature of the polymer and improves fire retardance. This is particularly the case with thermally labile comonomers of the carbonyl type when combustion occurs in the presence of oxygen (thermo-oxidative decomposition). Particularly preferred thermally labile comonomers include monomeric aldehydes containing carbonyl groups, such as for example; acrolein, methacrolein and crotonaldehyde. The selection of the best thermally labile comonomer should also involve consideration of the ease of copolymerization, toxicity, and coating properties of the resultant polymer binder, and in this regard we have found methacrolein to be the most preferred monomeric aldehyde.

The hardness or glass transition temperature of the copolymer, as determined for example by the minimum film formation temperature of the copolymer, is a function of the selection and concentration of the monomers used to prepare the copolymer binder. Useful products according to the invention may utilize copolymer binders possessing a broad range of hardness and minimum film formation temperatures depending on the specific end use desired. For example, a homopolymer formed from methyl methacrylate is hard and will possess a glass transition temperature (Tg) of about 105°C while a homopolymer formed from butyl acrylate is soft and has a Tg of - 54°C, ethyl acrylate -22°C, and a homopolymer of vinyl acetate a Tg of about 30°C. Copolymers of these monomers, as well as the other copolymerizable monomers described hereinbefore, generally have a glass transition temperature intermediate to the glass transition temperature of the homopolymers of such monomers as determined by the selected ratio of the comonomers employed. Binders useful for caulks and mastics typically have a relatively low-film formation temperature, for example, below about -10°C, while binders for latex paints to be applied at ordinary ambient temperatures may have film forming temperatures in the range of from about -10°C to about 35°C, and factory applied coatings, where heat may be available to assist film formation, may have minimum film formation temperatures on the order of up to about 80°C. When copolymers possessing particularly, but not necessarily, the higher Tg's are desired to be used in an intumescent coating formulation, but a lower minimum film formation temperature for the coating is desired, other additives, such as for example, plasticizers and coalescent aid solvents known in the art may be conventionally added to the formulation to optimize the film formation temperature provided that the addition of such additive or additives do not seriously detract from the fire retardance and intumescence of a coating formulation. Examples of useful plasticizers and coalescing solvents include dioctylphthalate, dibutylphthalate, Texanol® ester alcohol, hexylene glycol, butyl Carbitol®, various aliphatic esters and polyesters, such as for example, butyl Carbitol acetate, diethyl adipate, and the like.

We have found that the use of from about 1 to about 10 percent by weight of a thermally labile comonomer on the weight of all monomers charged to make the copolymer, and more preferably about 2 to about 6 percent by weight of one or more of the preferred thermally labile monomeric aldehydes, in combination with a predominant first monomer, and preferably with a (meth)acrylate as the predominant first monomer, produces copolymer binders useful in the invention, and preferably Class A flame spread and good intumescence in paint formulations having a PVC as low as about 35 percent.

We have found that while the molecular weight of the unmodified polymer binder can be optimized, by utilizing conventional chain transfer agents, such as for example mercaptans, to reduce flame spread, the molecular weight of the modified polymeric binder is not as critical to the operation of the binder of intumescent coatings as the concentration of the thermally labile comonomer employed, provided that the molecular weight of the resulting polymeric binder is high enough to produce good coating properties. In an intumescent paint formulation we have found that an initial weight average molecular weight of from about 300,000 to about one million is particularly effective with (meth)acrylate copolymer (predominant portion) modified binders.

Flame spread is a rating of fire retardance. It refers to how far a flame travels on a combustible panel sample

4

subjected to fire using as a control a flammable uncoated red oak panel having a flame spread of 100 and a non-flammable asbestos board panel having a flame spread of zero. Flame spread measurements and intumescence characterization, as exemplified in the illustrative examples which follow, were determined using ASTM test D 3807-79 using a two-foot tunnel. A panel of red oak was preconditioned in a constant temperature amd humidity room (CTR) for seven days prior to the test. After preconditioning the panel and before applying a coating, the panel was weighed. An intumescent coating formulation was then applied on one side of the panel using a 10-40 mil draw down bar. The coating panel was then allowed to dry in the CTR for 7 days prior to the test and weighed again. The gas flow rate in the tunnel was adjusted so that the non-flammable control gave a flame spread of 7.5 inches. This corresponds to about 16-18 inches of flame spread for red oak. The tunnel was then permitted to warm-up for about 20 minutes. The flame spread was then checked using 2 uncoated, pretreated red oak panels. At the end of the test two additional pre-conditioned red oak panels were tested to confirm the test results and conditions. The coated wood panel to be tested was then placed on the top opening of the tunnel at time zero. The steel cover was placed on and then the progress of the flame front was measured every 15 seconds up to 4.5 minutes. The flame spread was calculated using the equation $100 \times (FS - FS_o)/FS_f - FS_o)$ where Fs is the flame spread in inches of the tested sample, $FS_o$ is the flame spread (inches) of the non-flammable control and $FS_f$ the flame spread (inches) of the flammable control. Fire retardance was then categorized into 4 classes as a function of flame spread: Class A flame spread 0-25; Class B flame spread 26-75; Class C flame spread 76-200; and Class D flame spread 201-500.

In addition to flame spread, we also measured the char formation of the intumescent coating expressed as the expansion ratio of the char formed. This combines a visual estimate of the height of resulting char and a calculated expansion in cubic centimeters per gram which is equal to the foam or char height in centimeters divided by the film spread rate in grams per square centimeter. Film spread rate was measured by weighing the amount of paint applied to a measured area of substrate.

The best method of preparing the modified polymeric binder of the invention is by conventional emulsion polymerization. The following illustrates the technique used for preparing an predominant (meth)acrylate polymer modified with methacrolein as the thermally labile monomer. To a four neck, 2 liter round bottom flask equipped with a condenser, mechanical stirrer, nitrogen sparge and opening for the addition of reactants, was charged 319 grams of deionized water and 10.5 grams of 28% sodium lauryl sulfate surfactant. A heating mantle was used to heat the vessel contents to 80°C. A monomer emulsion of 477.5 grams water, 4.2 grams of 28% sodium lauryl sulfate, 287.1 grams butylacrylate, 268.3 grams methylmethacrylate and 7.7 grams of methacrylic acid was prepared. Twenty-one and a half grams of this monomer emulsion was added to the reactor vessel as a monomer preform. To this monomer emulsion preform in the reactor vessel was added 0.65 grams of ammonium persulfate as a free radical initiator in 11.0 grams water and a buffer system of 2.65 grams sodium carbonate in 15.0 grams water. The heat to the reactor vessel was then turned off. After five minutes the remaining monomer emulsion, to which was added 26.5 grams of methacrolein, began to be added to the reactor vessel along with 2.6 grams ammonium persulfate and 50 grams of water. The heat was turned back on to maintain the temperature at 85°C. The remaining monomer emulsion with methacrolein was fed over 160 to 170 minutes while the initiator was fed over 180 minutes. One hour after the feeds were completed the heat was turned off. A solution of 0.15 grams of 70% tertiary butylhydroperoxide with 0.5 grams of 28% solution lauryl sulfate in 5 grams of water was added followed by the addition of 0.08 grams Formopon® (sodium sulfoxylate) in 8 grams of water. A second solution identical to the first was added 30 minutes after the first was added, and an identical third solution was added 10 minutes after the second was completed. The pH of the sytem was then adjusted by the addition of 5.5 grams of 28% ammonia in 5.5 grams of water. The vessel was allowed to cool to ambient temperature and the contents were then filtered through 100 and 325 mesh screens. This technique was employed for preparing the modified polymer binders reported in the illustrative examples which follow.

The modified polymeric binder may then be formulated by conventional techniques, such as for example as by mixing, with conventional reactive (intumescent) pigment systems, dispersants, defoamers, thickeners and other additives conventionally employed to prepare the type of coating desired. The polymeric binder may be employed in clear or non-pigmented (no pigment other than reactive intumescent pigments are present) formulations and thick pigmented coatings such as, for example, caulks and mastics. Intumescent coatings containing the polymeric binder may be utilized for example in roofing applications to prevent ignition and flame spread. The polymeric binder may also be utilized in intumescent coatings for application onto non-combustible substrates to protect such substrates, such as for example, structural steel as in buildings, girders, and the like, vessels, or storage tanks, from weakening upon encountering very high temperatures in fires.

Reactive pigment spread rate is an important property of intumescent coatings as there must be sufficient reactive pigment per unit area to adequately cover the substrate. In conventional intumescent paints PVC levels of about 60 percent or higher are typically needed to obtain useful fire retardance, and as PVC level is lowered, reactive pigment spread rate and fire retardance degrades rapidly. We have found, however, that intumescent paints containing the polymeric binder modified with thermally labile comonomer of the invention do not substantially degrade in their ability to resist fire as the PVC is lowered from about 70% to about 35% provided that true reactive pigment spread rate is maintained as by increasing the total film thickness. The preferred PVC range for the present invention is from 30 to 70%.

We have also found that the addition of up to about 6% of a nonionic surfactant, such as for example, Rohm and Haas Company Triton® X-405 surfactant, based on total polymer solids, can improve the shelf-life stability of intumescent paint formulations containing the modified polymeric binder.

Furthermore, particle size of the polymeric binder is also a factor in shelf life stability of intumescent paints containing the modified polymer binder. We found that the particle size of the polymeric binder on the order of from about one tenth to about one-half micron contributes to improved shelf life stability. We also found that for shelf life stability, it is preferable not to neutralize the polymeric dispersion before blending with the pigment dispersion or to cause the pH of the final paint formulation containing the polymeric binder to become too high, such as for example, on the order of above pH 9.5, since the solubility of ammonium polyphosphate, conventionally used as one of the intumescent chemicals, in the formulation increases with increasing pH resulting in decreased stability. It is preferable, however, to maintain the pH more near neutrality, pH7, than to raise the pH above the neutrality.

The following examples are presented to illustrate the invention utilizing intumescent paint formulations. The examples should not be construed to limit the scope of the invention, as other applications for the polymeric binder in other coating formulations as well as other modification to the binder itself, will be obvious to one or ordinary skill in the art from the foregoing description and following examples.

Example 1: Effect of polymer binder (not modified) molecular weight on Flame Spread. (Comparative)

The following experiment was conducted to assess the role of the initial molecular weight of a (meth)acrylate copolymer without modification with a thermally labile comonomer as a function of the flame spread and char expansion technique previously described. The weight average molecular weights reported below were controlled by the addition of a chain transfer agent, methyl mercaptan propionate (MMP), during polymerization. The chemical composition of polymer samples 2-5 was otherwise the same: 48.7 wt percent butyl acrylate (BA); 50 wt% methyl methacrylate (MMA), and 1.3% methacrylic acid (MAA), and sample 1 comprised 47.7 wt% BA, 50 wt% MMA, 1.3% MMA and 1% of a properietary monomer which results in a substantial increase in $\overline{Mw}$ over sample 2.

TABLE 1

| SAMPLE | % MMP | $\overline{MW}$ | FLAME SPREAD | EXPANSION (a/g) |
|---|---|---|---|---|
| 1 | 0.0 | $2.12 \times 10^7$ | 44 | 5.2 |
| 2 | 0.0 | $6.13 \times 10^6$ | 36 | 6.4 |
| 3 | 0.1 | $1.20 \times 10^6$ | 32 | 7.2 |
| 4 | 0.9 | $9.76 \times 10^4$ | 43 | 9.9 |
| 5 | 2.0 | $5.24 \times 10^4$ | 47 | 12.1 |

Accordingly, based on the above results, the best fire retardance (flame spread) occurred with Sample 3 having a weight average molecular weight of about 1,200,000. Note, however, that Sample 3 does not meet Class A fire retardance.

Example 2: Modification to Polymeric Binder

This example illustrates the reduction in flame spread resulting from modifying the polymeric latex binder (sample 1 of example 1) by polymerizing the same acrylic monomers with differing levels of methacrolein (MAC), but without the use of a chain transfer agent to control the molecular weight of the copolymer. Table 2 shows the thermal decomposition onset temperature (by thermogravimetric analysis) as a function of methacrolein charged. Table 3 shows the thermal onset of decomposition when combustion is conducted in air (and Nitrogen. (Table 3))

TABLE 2

| SAMPLE | WT% MAC | $\overline{MW}$ [1] | TGA onset in air (°C) |
|---|---|---|---|
| 1 | 0.0- | $2.12 \times 10^7$ | 329.1 |
| 6 | 1.5- | $5.16 \times 10^5$ | 260.5 |
| 7 | 2.25 | $1.48 \times 10^6$ | 241.3 |
| 8 | 3.0- | $6.32 \times 10^5$ | 227.7 |
| 9 | 3.0- | $1.02 \times 10^8$ | 224.3 |
| 10 | 4.5- | $1.52 \times 10^6$ | 195.3 |

[1] Apparent MW- weight average molecular weight by gel permeation chromatography.

Table 2 illustrates that onset of thermal decomposition of the polymer is directly proportional to the level of methacrolein (MAC) charged to the reactor. In addition, Table 2 also shows that the onset of thermal decomposition is not directly related to the molecular weight of the modified polymer binder. Table 3 shows the effect of the presence of air on the decomposition of a modified polymeric binder.

TABLE 3

| SAMPLE | COMPOSITION | Wt% MAC | TGA Onset (°C) | |
|---|---|---|---|---|
| | | | AIR | Nitrogen |
| 11 | 48.7% BA/50.0% MMA/1.3% MAA | 0 | 311 | 376 |
| 12 | 48.7% BA/48.5% MMA/1.3% MAA | 1.5 | 270 | 373 |
| 13 | 48.7% BA/47.0% MMA/1.3% MAA | 3.0 | 233 | 385 |
| 14 | 48.7% BA/45.5% MMA/1.3% MAA | 4.5 | 208 | 384 |
| 15 | 48.7% BA/45.5% MMA/1.3% MAA | 4.5 | 193 | 384 |

Example 3: Formulation and Evaluation of Intumescent Paints
The following pigment dispersion was prepared by mixing the following ingredients in a ball mill for 24 hours.

| MATERIAL | AMOUNT, GRAMS |
|---|---|
| Water | 126.42 |
| Propylene glycol | 25.00 |
| Tamol 731 (25%) (pigment dispersant) | 11.50 |
| Surfynol 104E (Air Products) (Defoamer) | 2.00 |
| Attagel 50 (Thickener) | 5.00 |
| Chlorowax 70L (Diamond Shamrock) (Blowing Agent) | 15.38 |
| Acetone dispersant to predisperse the Chlorowax | 20.00 |
| Natrosol MR 2.56 (Hercules) (Thickener) | 12.00 |
| Phoschek P 30 (Montsanto) (ammonium polyphosphate) | 100.00 |
| Dipentaerythritol | 28.85 |
| Melamine (blowing agent) | 30.77 |
| Titanium Dioxide Rutile 900 - (Dupont) (opacifying pigment) | 23.08 |
| | 400.00 |

The pigment dispersion was then let down with the polymer binders of examples 1 and 2, as indicated in Table 4, to form paints having a solids level of about 45% and PVC of 67, 50 and 33%. A 67% PVC paint contained 400 grams of pigment dispersion with 55.76 grams polymer (solid); a 50% PVC paint contained 200 grams pigment dispersion and 55.76 grams polymer; and the 33% PVC paint contained 100 grams pigment dispersion and 55.76 grams polymer. The viscosity of each paint formulation was adjusted to about 85 KU using 2.5% Natrosol MHR. Each of the paints was then applied to 23.875 inch x 3.875 inch x 0.25 inch red oak panels using a 20 mil drawn down bar to give a film thickness of approximately 8 mils. The panels were then dried in the CTR and tested by the flame spread test (ASTM D3807-79 previously described).

TABLE 4

| POLYMERIC BINDER SAMPLE | WT% MAC CHARGED | PVC | FLAME SPREAD | EXPANSION(cc'g) |
|---|---|---|---|---|
| Control [1] | 0 | 67 | 45 | 6 |
| Control [2] | 0 | 67 | 47 | neg. |
| 1(Comparative) | 0 | 67 | 44 | 5 |
| 3(Comparative) | 0 | 67 | 32 | 7 |
| 4(Comparative | 0 | 67 | 43 | 10 |
| 6 | 1.5 | 67 | 45 | 9 |
| 7 | 2.25 | 67 | 26 | 24 |
| 8 | 3.0 | 67 | 31 | 16 |
| 9 | 3.0 | 67 | 30 | 19 |
| 10 | 4.5 | 67 | 20 | 19 |
| Control 1 | 0 | 50 | 60 | neg. |
| 3(Comparative) | 0 | 50 | 63 | 7 |
| 4(Comparative) | 0 | 50 | 50 | 6 |
| 7 | 2.5 | 50 | 40 | 27 |
| 8 | 3.0 | 50 | 30 | 20 |
| 9 | 3.0 | 50 | 39 | 15 |
| 10 | 4.5 | 50 | 20 | 29 |
| Control 1 | 0 | 33 | 67 | neg. |
| 3(Comparative) | 0 | 33 | 64 | 9 |
| 4(Comparative) | 0 | 33 | 62 | 3 |
| 7 | 2.25 | 33 | 35 | 10 |
| 8 | 3.0 | 33 | 31 | 11 |
| 10 | 4.5 | 33 | 26 | 12 |

[1] Control is a commercial all - acrylic latex polymer, Rhoplex® AC-22, used for wall paints.
[2] Control 2 is a commercial all - acrylic latex polymer, Rhoplex® AC-61, used for floor and trim paints.

The results show that increasing the concentration of the thermally labile comonomer improves (i.e., decreases) flame spread and that Class A fire retardance is achievable with the modified polymeric binder at a PVC as low as 33% PVC. Note, also that side-by-side comparisons of non-modified polymer (Sample 3) having an optimal initial $\overline{Mw}$ is generally poorer in both flame spread and expansion (except at high PVC concentrations) than the modified polymer binder even when its $\overline{Mw}$ has not been optimized.

Example 4: Comparative Fire Retardance
The following example presents the results of fire retardant tests with intumescent paint formulations, prepared according to Example 3, containing the polymeric binders of the invention and compares the results with conventional polymer binders. The results are presented in Table 5.

TABLE 5

| POLYMERIC BINDER | | PVC | FLAME SPREAD | EXPANSION |
|---|---|---|---|---|
| SAMPLE | COMPOSITION WT% | | | |
| CONTROL 1 | | 67 | 45 | 6 |
| SAMPLE 10 | | 67 | 20 | 19 |
| COMPARATIVE 1 | 77 VAC[1]/23 BA | 67 | 20 | 7 |
| COMPARATIVE 2 | 64.7 BA/31.25 AN[2]/4MMA | 67 | 24 | 8 |
| COMPARATIVE 3 | 60 VCI[3]/39 BA/1 MAA | 67 | 18 | 11 |
| COMPARATIVE 4 | ALBI - ALKYD | 67 | 20 | 24 |
| COMPARATIVE 5 | MURALO VAC/ACRYLIC | 67 | 23 | 16 |
| CONTROL 1 | | 50 | 60 | --- |
| SAMPLE 10 | | 50 | 20 | 29 |
| COMPARATIVE 1 | | 50 | 24 | 8 |
| COMPARATIVE 2 | | 50 | 55 | --- |
| COMPARATIVE 3 | | 50 | 24 | 4 |
| CONTROL 1 | | 33 | 67 | - |
| SAMPLE 10 | | 33 | 26 | 12 |
| COMPARATIVE 1 | | 33 | 52 | --- |
| COMPARATIVE 2 | | 33 | 68 | --- |
| COMPARATIVE 3 | | 33 | 40 | --- |

[1] VAC is vinylacetate
[2] AN is acrylonitrile
[3] VCI is vinylidene chloride

The above results demonstrate that the modified polymeric binder of the invention performs better at low PVC (50% and 33%) in terms of its flame spread and intumescence than comparative conventional binders and is approximately equivalent at high PVC (67%) to conventional alkyd and vinylacetate (VAC)/acrylic intumescent binders.

Example 5: Modifications to Pigment System
The following experiments demonstrate the fire resistance provided by the modified polymer binder of the invention as a function of other components of the reactive pigment system by substituting or deleting various components of the reactive pigment system described in Example 3 using Sample 10 polymer binder (PVC 50%, spread rate 0.035 g/cm$^2$).

TABLE 7

| PIGMENT SUB-STITUTED | NEW PIGMENT | FLAME SPREAD | EXPAN-SION |
|---|---|---|---|
| SAMPLE 10 (CON-TROL) | | 21 | 11.8 |
| CHLORO-WAX | ---- | 17 | 14.3 |
| DEPEN-TAERY-THRITOL | PEN-TAERY-THRITOL | 31 | 9.7 |
| ME-LAMINE | UREA | 48 | 8.8 |
| SAMPLE 10 CONTROL | | 26 | 12.0 |
| PHO-SCHEK® P30 | EXOLIT® 462 (HOECH-ST) | 26 | 12.0 |

The results indicated that eliminating the Chlorowax did not result in poorer fire retardance, but substituting pentaerythritol for dipentaerythritol and urea for melamine did reduce fire resistance. There was no difference in substituting Exolit 462 for Phoschek as the source of ammonium phosphate.

Example 6: Use of other thermally Labile Aldehydes In Intumescent paint (Example 3)

Table 8 presents the results of substituting crotonaldehyde for methacrolein in the intumescent paint formulation of example 3.

Table 9 presents the results of a second set of experiments comparing the fire retardance of a paint formulation (having a PVC of 52.6) with a conventional binder and the modified binder of the invention.

TABLE 8

| THER-MALLY LABILE MONOME-R | WT% | FLAME SPREAD | EXPAN-SION RATIO |
|---|---|---|---|
| NONE | 0 | 51 | 3.9 |
| METHAC-ROLEIN (MAC) | 4.5 | 25 | 12.9 |
| CROTY-LALDE-HYDE (CA) | 4.5 | 25 | 13.9 |

11

TABLE 9

| SAMPLE COMPOSITION WT% | | FLAME SPREAD | EXPAN-SION RATIO |
|---|---|---|---|
| Com-parative | 48.7 BA/50.0 MMA/1.3 MAA | 41.3 | 12.3 |
| | 48.7 BA/45.5 MMA/1.3 MAA/4.5 MAC | 17.8 | 24.3 |
| | 48.7 BA/45.5 MMA/1.3 MAA/4.5 CA | 33.1 | 28.4 |
| Com-parative | Commer-cial Water Based Paint (VAC) at PVC > 60% | 13.1 | 24.3 |
| Com-parative | Commer-cial Solvent Based Paint | 10.1 | 21.3 |

## Claims

1. A copolymer, for use in or as a polymeric binder in intumescent coatings, comprising a copolymer formed from a predominant amount, preferably no more than 99 wt %, and more preferably 99-90 wt %, of one or more first monomers and a minor amount, preferably at least 1 wt % and more preferably from 1 to 10 wt %, of at least one copolymerizable thermally labile comonomer, the amount of said at least one thermally labile comonomer being sufficient to cause the resultant copolymer to decompose into fragments of lower molecular weight when exposed to flame.

2. A copolymer according to Claim 1 wherein at least one of or all of said first monomers is/are ethylenically unsaturated.

3. A copolymer according to Claim 1 or 2 wherein the minimum film formation temperature of said copolymer is no more less than 80°C.

4. A copolymer according to any preceding Claim having a weight average molecular weight of at least 300,000.

5. A copolymer according to Claim 2 or Claim 3 wherein said ethylenically unsaturated monomers are esters of lower alkyl $(C_1-C_4)$ (meth)acrylic acid, vinyl acetate or styrene.

6. A copolymer according to any preceding Claim wherein said thermally labile comonomer is a free radical generating compound containing a carbon atom double bonded to an oxygen atom, and is preferably a monomeric aldehyde, more preferably acrolein, methacrolein or crotonaldehyde.

7. A fire retardant coating comprising a reactive pigment system and a film-forming polymeric binder comprising copolymer according to any preceding Claim.

8. A coating according to Claim 7 in which the pigment volume concentration is from 30 to 70%.

9. A fire retardant coating according to Claim 7 or 8 in the form of a paint, caulk or mastic.

10. A method of forming a fire retardant coating comprising copolymerizing from about 1 to about 10 wt % of a thermally labile monomer with from about 99 to about 90 wt % of at least one other, preferably ethylenically unsaturated, monomer, and mixing the resultant copolymer with a reactive pigment system to a pigment volume concentration of from 30 to 70 %.